# EUROPEAN PATENT SPECIFICATION

(11) **EP 2 183 308 B1**
(45) Date of publication and mention of the grant of the patent: **25.12.2019**
(21) Application number: 08781787.0
(22) Date of filing: 14.07.2008
(51) Int. Cl.: C08J 5/22

(54) **CATION CONDUCTIVE MEMBRANES COMPRISING POLYSULFONIC ACID POLYMERS AND METAL SALTS HAVING AN F-CONTAINING ANION**
KATIONENLEITFÄHIGE MEMBRANEN, UMFASSEND POLYSULFONSÄUREPOLYMERE UND METALLSALZE MIT EINEM F-HALTIGEN ANION
MEMBRANES CONDUCTRICES DE CATIONS COMPRENANT DES POLYMÈRES D'ACIDE POLYSULFONIQUE ET DES SELS MÉTALLIQUES AYANT UN ANION CONTENANT F

(30) Priority: 24.07.2007 GB 0714361
(43) Date of publication of application: 12.05.2010
(73) Proprietor: 3M Innovative Properties Company, St. Paul, MN 55133-3427 (US)
(72) Inventor: MOSZCZYNSKA, Aleksandra, 95447 Bayreuth (DE); WOLF, Hannes, D-95447 Bayreuth (DE); WILLERT-PORADA, Monika A., D-95447 Bayreuth (DE)
(74) Representative: Kurz, Arnd
(86) International application number: PCT/US2008/069944
(87) International publication number: WO 2009/014930

(56) References cited:
- EP-A- 1 468 719
- EP-A1- 1 914 251
- JP-A- 2004 010 677
- US-A- 6 140 436
- US-A1- 2005 165 172
- US-A1- 2006 110 645

## Description

### Field of the invention

The present invention relates to electrochemical devices containing solid electrolyte membranes. The membranes comprise polysulfonic acid polymers and metal salts having an F-containing anion. The invention also relates to membranes for electrochemical devices and methods of preparing them.

### Background

The interest in solid electrolyte membranes has considerably grown because they are increasingly used in electrochemical devices, including fuel cells or electrolysis cells and the like. These devices typically contain a unit referred to as a membrane electrode assembly (MEA). Such MEA's comprise one or more electrode portions, which include a catalytic electrode material such as, for example, Pt or Pd, in contact with an ion conductive membrane. Polymer electrolyte membranes (PEMs) are used in electrochemical cells as solid electrolytes. In a typical electrochemical cell, a PEM is in contact with cathode and anode electrodes, and transports ions formed at the anode to the cathode, allowing a current of electrons to flow in an external circuit connecting the electrodes.

PEMs also find use in chlor-alkali cells wherein brine mixtures are separated to form chlorine gas and sodium hydroxide. The membrane selectively transports sodium cations while rejecting chloride anions.

A variety of polysulfonic acid polymers are known to be cation conductors, such as, for example Nafion ™, from DuPont, which contains perfluoro side chains on a PTFE backbone or Gore Select ™ from W.L. Gore which contains perfluoro side chains on a PTFE backbone in a polymer matrix. All of these polymer materials are polysulfonic acids and rely on the sulfonate functionality (R-SO₃⁻) as the stationary counter charge for the mobile cations (such as H+, Li+, Na+ etc.), which are generally monovalent.

One difficulty associated with polysulfonic acid membranes is that the membranes require the presence of water for conductivity. When these membranes are exposed to conditions of low humidity and/or high temperatures (e.g. temperatures above about 90°C) their resistance increases and their proton conductivity decreases. However, in many industrial applications (for example in fuel cells) exposure to high temperatures and/or low humidity is required. Excessive cooling of the cell system is necessary for maintaining satisfactory proton conductivity. This leads to increasing operating costs and presents an economical disadvantage.

Therefore, there is a need to provide PEMs based on polysulfonic acids, in particular PEMs suitable for fuel cells, such as hydrogen or alcohol fuel cells, that maintain a satisfactory level of cation-conductivity, in particular proton-conductivity, even at high temperatures and/or low humidity.

In WO 2004/074179 a system is described having a proton conductivity of at least 0.001 S/cm at a relative humidity below 1% and a temperature of 100°C. This system comprises a proton-conducting membrane containing tetravalent phosphates of the general formula M(IV)(HPO₄)(H₂PO₄)₂ with M(IV) being a tetravalent metal.

In WO 2005/105667 a similar system is described comprising a proton-conducting membrane with pores filled with phosphates of the formula M(IV)[O₂P(OH)₂]₂[O₂PO(OH)].

### Summary

In the following there is provided an electrochemical device containing a membrane as claimed.

In another aspect there are provided methods of preparing an electrolyte membrane as described in the claims.

In yet another aspect there is provided a membrane for an electrochemical device.

### Brief description of the drawings

Figure 1 shows the IR spectrum of the dry membrane PFSA_D800 with suggested assignments of some peaks.
Figure 2 shows the EIS measurements of the membranes of example 2;
   D_800_1_I_s_A represents the non-doped membrane;
   D_800_CaF2_1_5:1_I_s_A represents the membrane doped with CaF₂ in a molar ratio -SO₃H : CaF₂ of 5 : 1;
   D_800_CaF2_5_10:1_III_s_A represents the membrane doped with CaF₂ in a molar ratio of -SO₃H : CaF₂ of 10 : 1.
Figure 3 shows an EIS spectrum obtained with the membranes of example 1;
   D_800_1_I_s_A represents the non-doped membrane;
   D_800_ZrF4_3_4:1_I_s_A represents the membrane doped with ZrF₄ in a molar ratio -SO₃H : ZrF₄ of 4 : 1;
   D_800_ZrF4_2_10:1_I_s_A represents the membrane doped with ZrF₄ in a molar ratio of -SO₃H : ZrF₄ of 10 : 1.
Figure 4 shows an EIS spectrum obtained with the membranes of example 3;
   D_800_1_I_s_A represents the non-doped membrane;
   D_800_ZrF4_2_10:1_I_s_A represents the membrane doped with ZrF₄ in a molar ratio -SO₃H : ZrF₄ of 10 : 1 as obtained in example 1;
   D_800_ZrF4_18_10:1_I_s_B represents the membrane doped with ZrF₄ in a molar ratio of -SO₃H : ZrF₄ of 10 : 1 and treated with H₃PO₄ as obtained in example 3;
   D_800_H3PO4_2_1:1_I_s_A represents a membrane not doped with ZrF4 but treated with H₃PO₄ only as described in example 3.

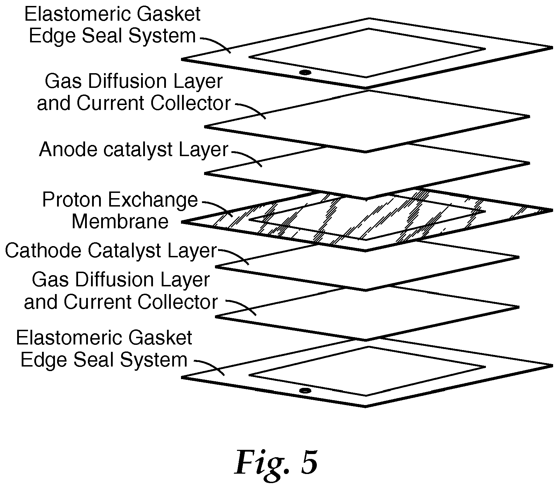

Figure 5 shows a schematic representation of a typical membrane electrode assembly (MEA).

### Detailed description

### Polysulfonic acid polymers

The membranes comprise at least one polsulfonic acid polymer. The polymer has a plurality of -SO₃⁻X groups or precursors thereof, such as -SO₂Y groups or combinations thereof. The -SO₃⁻X groups provide ionic conductivity to the fluoropolymer. The precursor groups may be hydrolyzed and optionally ion-exchanged to form -SO₃⁻X-groups.

The -SO₃⁻X or their precursor groups may be part of the polymer backbone or may be part of one or more pendent groups.

X represents H or M. H represent a hydrogen ion (H+). M represents a monovalent or multivalent cation, preferably a metal cation, including but not limited to Li+, Na+ K+, etc.
Y represents a leaving group that can be converted into -O⁻M by hydrolization reaction with a base, such as for example, NaOH, LiOH or KOH. Y includes but is not limited to F, Cl, I, Br (preferably F), an ester or an amine group including but not limited to -OR, with R being a linear or branched alkyl such as, for example, methyl, ethyl, propyl, butyl, tert-butyl etc, or an aryl such as a phenoxy, trityl, -NH₂, -NHR or -NR1R2 with R1 and R2 being independent from each other a residue according to R.

The -SO₂Y group can be hydrolyzed by treatment with a base MOH to form ionic groups -SO₃⁻M. Hydrolyzation may be carried out in any conventional manner. For example, the polymer may initially be reacted with a base, such as LiOH, NaOH, KOH, or combinations thereof. The polymer may then be reacted with an acid or an ion exchange resin to provide
-SO₃⁻H. Accordingly, after the polymerization and hydrolyzation, the polymer is a ionomer having -SO₃⁻X groups.

This hydrolyzation reaction may apply in the same manner to any -SO₂Y groups on the backbone chain to form -SO₃⁻X groups.

The hydrolization of the precursor group may be carried out before or after the polymer has been treated to form a membrane. For example, the precursor polymer may be extruded to form a membrane followed by subsequent hydrolyzation of the precursor groups to sulfonic acids or sulfonic acid salts.

The -SO₃⁻X groups or their precursor groups are preferably in the terminating position of the polymer backbone or of a side chain. Preferably they are part of one or more, identical or different pending side chains corresponding to the general formula

]-Rp-SO₃⁻X

or

]-Rp-SO₂Y

in which X is defined as above and Rp represents a branched or non-branched, linear or cyclic, perfluorinated or partially fluorinated alkyl, alkoxy or polyoxyalkyl group linked to the polymer backbone (the link is represented by (]). Rp may typically comprise from 1 to 15 carbon atoms and from 0 to 4 oxygen atoms.
The side chains may be derived from perfluoro olefins, perfluoro ally or perfluoro vinyl ether bearing an -SO₃⁻X group or precursor, wherein the precursor groups may be subsequently converted into -SO₃⁻X groups.

Specific examples of ]-Rp include but are not limited to:
]-(CF₂)n- where n is 1, 2, 3, 4, 5, 6, 7, 8, 9, 10, 11, 12, 13, 14 or 15
]-(CF2CF(CF3))n- where n is 1, 2, 3, 4, or 5
]-(CF(CF3)CF2)n- where n is 1, 2, 3, 4, or 5
]-(CF2CF(CF3)-)n-CF2- where n is 1, 2, 3 or 4
]-(O-CF2CF2-)n where n is 1, 2, 3, 4, 5, 6 or 7
]-(O-CF2CF2CF2-)n where n is 1, 2, 3, 4, or 5
]-(O-CF2CF2CF2CF2-)n where n is 1, 2 or 3
]-(O-CF2CF(CF3)-)n where n is 1, 2, 3, 4, or 5
]-(O-CF2CF(CF2CF3)-)n where n is 1, 2 or 3
]-(O-CF(CF3)CF2-)n where n is 1, 2, 3, 4 or 5
]-(O-CF(CF2CF3)CF2-)n where n is 1, 2 or 3
]-(O-CF2CF(CF3)-)n-O-(CF2)m- where n is 1, 2, 3 or 4 and m is 1 or 2
]-(O-CF2CF(CF2CF3)-)n-O-(CF2)m- where n is 1, 2 or 3 and m is 1 or 2
]-(O-CF(CF3)CF2-)n-O-(CF2)m- where n is 1, 2, 3 or 4 and m is 1 or 2
]-(O-CF(CF2CF3)CF2-)n-O-(CF2)m- where n is 1, 2 or 3 and m is 1 or 2
]-O-(CF2)n- where n is 1, 2, 3, 4, 5, 6, 7, 8, 9, 10, 11, 12, 13 or 14
]-O-CF2-CF(O(CF2)-)CF3 where n is 1, 2 or 3.
Analogue groups derived from perfluoro allyl ether or perfluoroalkoxy allyl ether are not specifically identified above but are also included.

Particularly suitable pendent groups include
-O(CF₂)nSO₃⁻X with n being 1, 2, 3, 4 or 5,
-O(CF₂)₄SO₃⁻X, -O(CF₂)₄SO₂Y, -OCF₂CF(CF₃)OCF₂CF₂SO₃⁻X,
-OCF₂CF(CF₃)OCF₂CF₂SO₂Y, O-CF₂-CF(OCF₂CF₂SO₃⁻X)CF₃,
-O-CF₂-CF(OCF₂CF₂SO₂Y)CF₃ and combinations thereof with X and Y being defined as described above. Preferably, in these formulae X represents H+, Li+, Na+, K+ and Y represents F.

The pending groups may be introduced by copolymerizing the corresponding sulfonyl monomers (preferably sulfonylfluoride monomers) or by grafting the side groups to the backbone (EP 1 242 473 A1). Suitable corresponding monomers include those according to the formula above where "]-" is replaced with "CZ₂=CZ-", or CZ₂=CZ-O- e.g. CZ₂=CZ-Rp-SO₂Y, or CZ₂=CZ-O-Rp-SO₂Y where Z may be F or H and Y is defined as above and is preferably F. The sulfonyl fluoride monomers may be synthesized by standard methods, such for example methods disclosed in Guerra, U.S. Pat. No. 6,624,328 including the references cited therein, which are incorporated herein by reference. The Rp-SO₂F groups of the sulfonyl fluoride monomers generally define the pendent groups of the resulting fluoropolymer after the polymerization.

The polymer (or the backbone chain) comprising the sulfonic acid groups or precursors thereof may comprise a fluoropolymer, a sulfonated polyether ketone (sPEEK), a poly ether sulfone, sulfonated poly phenoxy phosphazenes. Suitable polymers are described in ether sulfone, sulfonated poly phenoxy phosphazenes. Suitable polymers are described in Hickner, M. A.; Ghassemi, H.; Kim, Y. S.; Einsla, B. R.; McGrath, J. E. "Alternative Polymer Systems for Proton Exchange Membranes (PEM's)", Chem. Rev., 2004, 104, 4587-4612. An sPEEK membrane is commercially available from Victrex plc in Great Britain.

The polymer backbone is a fluoropolymer. The fluoropolymer is fully fluorinated. Suitable fluorine concentrations in the backbone chain include about 40 % or more by weight, based on the entire weight of the backbone chain. The polymers typically comprise repeating units derived from fluorinated olefins, such as, for example, tetrafluoroethylene (TFE), hexafluoropropylene (HFP) or a combination thereof. They may further comprise repeating units derived from chlorotrifluoroethylene (CTFE), perfluorinated allyl or vinyl ethers including those of the general formula

CF₂=CF-(CF₂)ₗ-O(R^{a}_{f}O)ₙ(R^{b}_{f}O)ₘR^{c}_{f}

wherein R^{a}_{f} and R^{b}_{f} are different linear or branched perfluoroalkylene groups of 1 to 6 carbon atoms, in particular 2 to 6 carbon atoms, 1 is either 0 or 1, m and n are independently 0 to 10 and R^{c}_{f} is a perfluoroalkyl group of 1 to 6 carbon atoms.
Specific examples of perfluorinated vinyl ethers include perfluoromethylvinylether (PMVE), perfluorpropylvinyl ether (PPVE-1, PPVE-2), perfluoro-3-methoxy-n-propylvinyl ether, perfluoro-2-methoxy-ethylvinyl ether or PPVE-3 (CF₃-(CF₂)₂-O-CF(CF₃)-CF₂-O-CF(CF₃)-CF₂-O-CF=CF₂).

Preferably, the polymer is a perfluorinated polyalkyl or polyoxy alkyl. Perfluorinated means that all hydrocarbons of the polyalkyl or polyoxyalkyl are replaced by F-atoms. Preferably, the polymer is perfluorinated and comprises repeating units derived from TFE.

The polymers may have an equivalent weight (EW) in grams of greater than 700, greater than 800, greater than 900, or greater than 1000. The polymers may have an equivalent weight (EW) of less than 1200, or less than 1100. "Equivalent weight" (EW) of a polymer means the weight of the polymer in grams which will neutralize one equivalent of base and is determined by dividing the weight in grams of the polymer by the amount in moles of acid groups it contains.

The polymers may be produced by radical polymerization using suitable initiators, such as, for example peroxides, persulfates, percarbonates, esters, manganese-containing initiators, cerium-containing initiators, and combinations thereof. Additional examples of suitable initiators include initiator systems that generate free radicals through a redox reaction, such as a combination of an oxidizing agent and a reducing agent. Suitable oxidizing agents include persulfates, such as ammonium persulfate (APS), potassium persulfate (KPS), sodium persulfate, and combinations thereof. Additional suitable oxidizing agents include compounds containing chlorate ions, hypochlorite ions, bromate ions, and combinations thereof. Suitable reducing agents include sulfites, such as sodium sulfite, sodium bisulfite, metabisulfite (e.g., sodium and potassium bisulfite), pyrosulfites, thiosulfates, and combinations thereof. Examples of suitable redox systems for use as initiators include a combination of peroxodisulphate and hydrogen sulphite or disulphite, a combination of thiosulphate and peroxodisulphate, a combination of peroxodisulphate and hydrazine or azodicarboxamide, and a combination of peroxodisulphite and sodium chloride. Suitable concentrations of the initiator in the polymerization mixture range from about 0.01% to about 3.0%, by weight, with particularly suitable concentrations ranging from about 0.05% to about 2.0%, by weight, based on the entire weight of the polymerization mixture.

The radical polymerization may be carried out in a variety of manners, such as in an organic solvent, as an aqueous suspension polymerization, or as an aqueous emulsion polymerization and is described, for example, in US Pat Nos 7,071,271 and 7, 214,740, which are incorporated herein by reference.

The polymerization mixture may also contain additional components, such as buffers, chain-transfer agents, stabilizers, processing aids, and combinations thereof. Chain-transfer agents, such as gaseous hydrocarbon chain-transfer agents, may be used to adjust the molecular weight of the resulting polymer.

The polymerization mixture for preparing the polymer described above may also contain disulphites, such as sodium disulphite, which may be used with oxidizing agents (e.g. APS, chlorate ions, hypochlorite ions, and bromate ions) to provide -SO₃⁻X groups on the backbone chain. The polymerization mixture may also contain fluoroalkylsulfinates and fluoroalkylsulfinic acids, which may also be used with oxidizing agents (e.g., APS, chlorate ions, hypochlorite ions, and bromate ions) to provide a fluoropolymer of the present invention.

The polymers as described herein may contain in total less than 100, preferably less than 50 of the carbonyl containing end groups -COOH, -COF, -CONH₂ and -COF, per 1 x 10⁶ carbon atoms. The polymers as described herein may contain at least one -CF2Y' end group, where Y' is a reactive atom or group, such as a chlorine atom, a bromine atom, an iodine atom, or a nitrile group. A particularly suitable composition has -CF2Cl end groups (i.e., Y' is a chlorine atom). -CF2Y' can be converted into -CF3 by post fluorination.
-CF2Y' end group containing fluoropolymers may be prepared by a free-radical polymerization of the monomers of the fluoropolymer, including monomers containing the -SO₃⁻X precursor groups in the presence of an initiator and a salt containing the anion Y' (such as KCl, in case Y' is Cl) and/or pseudohalogen, preferably in a molar ratio of initiator to salt of from between about 1/0.1 to about 0.1/10, with particularly suitable molar ratios ranging from between about 1/0.5 to about 0.1/5. The preparation of -CF2Y' end group containing fluoropolymers is described in detail in US 7,214,740, which is incorporated herein by reference.

The polymerization may be followed by a hydrolyzation to provide ionic -SO₃⁻X groups.

### The polysulfonic acid membranes

Polymer electrolyte membranes (PEM) as provided herein may be suitable for use in fuel cells, electrolysis cells, or batteries. Fuel cells are electrochemical cells which produce usable electricity by the catalyzed combination of a fuel such as hydrogen, methanol or other alcohols and an oxidant such as oxygen. Preferably, the PEMs are suitable for use in fuel cells, particularly fuel cells using alcohol or hydrogen as fuel. Most preferably, the fuel cell is a hydrogen/oxygen fuel cell where hydrogen is oxidized to water (fuel cell reaction).

Typically, the membrane is a thin solid polymer sheet capable of allowing hydrogen ions to pass through it but is not or only poorly electron conducting. Furthermore, the membrane is capable to separate the gaseous reactants and provides a durable, electrically non-conductive mechanical barrier between the reactant gases, yet it also passes protons (H+ ions) readily.

Additionally, the membrane is preferably capable of withstanding at least temperatures of greater than 80 and less than 130°C.

The PEM may be coated or impregnated with one or more catalysts suitable for catalyzing the fuel cell reaction (e.g., platinum or platinum/ruthenium). Alternatively, the PEM may be attached to catalyst layers or attached to electrodes. At least one of these electrodes may be formed from an electrocatalyst coating composition. For example, the PEM may be sandwiched between two electrode layers, the anode and the cathode, and may be supported by a gas diffusion backing.

The membranes as provided herein are cation-conductive, depending on the counterion of the polysulfonic acid groups. Preferably, the counterion is a hydrogen proton and the membranes are proton-conductive. The membranes provided herein may be proton-conductive at room temperature but may also have a good proton conductivity even at low levels of humidity and/or elevated temperatures such as, for example, in the temperature range of greater than about 90°C and below about 130°C and or a humidity level of less than 50% relative humidity. The polysulfonic acid membranes may have a proton conductivity of at least about 0.10 Siemens/cm in an operating range of, e.g., between about 80 and about 130°C. Preferably, the membranes have a proton conductivity of at least 0.10 Siemens/cm at a temperature between about 80 and 130°C and a relative humidity of less than about 50%, preferably less than 30% relative humidity.

The membranes typically have only poor or essentially no electron conductivity, in particular at a temperature range of from about room temperature to about 130°C. Typically, they have an electron conductivity of less than 1 µS/cm at room temperature.

Furthermore, the membranes are preferably essentially impermeable to gases, such as hydrogen, oxygen or chlorine. Typically the membranes as provided herein may have a permeability to the gases employed in the reaction, e.g. hydrogen, of less than 1 x 10⁻¹² mol/cm s bar (for example as measured by cyclic voltammetry, cf. K. Broka, P. Ekdunge, Journal of Applied Electrochemistry, 27, 117-123 (1997)).

Typically, the membranes can have any suitable shape or geometrical form including squares, rectangles, circles, cylinders etc. Typically, the membranes are in the form of a sheet, being approximately of equal length and width or different length and width. Typically, the membranes have a thickness appropriate to the intended use. For use in fuel cells the membrane typically has a thickness or diameter of 100 micron or less, of 90 microns or less, of 60 microns or less or of 30 microns or less. Thinner membrane may provide less resistance to the passage of ions. In fuel cell use, this may result in cooler operation and greater output of usable energy.

When used in an electrolysis cell or a battery, the membranes may be thicker and may have a thickness or diameter of 90 to 300 microns.

### Metal salts comprising an F-containing anion

F-containing anions as referred to herein include fluorides (F⁻), and fluorine-containing anionic complexes or mixtures thereof. The metal salts may comprise one or more of the F-containing anions.

Typically, the metal salt comprising an F-containing anion is of low molecular weight, preferably, less than about 1000 g/mol, or less than about 800 g/mol or less than about 500 g/mol.

Typical examples are metal fluorides include but are not limited to CaF₂, MgF₂, ZrF₄, MnF₂, SnF₂, SnF₄, LiF, CeF₂, WiF₂, KF, AgF₂, CoF₃, AlF₃, SbF₃, UF₄, UF₆, NaF, SiF₄, TiF₄, SbF₅ etc.

Preferred metal fluorides for use in the system described herein include but are not limited to CaF₂, ZrF₄, TiF₄, SbF₃ or combinations thereof.

Examples of fluorine-containing anionic complexes include [M'F₄]⁻, [M'F₄]²⁻, [M'Fₑ]²⁻, [M'F₇]²⁻ with M' representing a metal cation or a combination of metal cations of corresponding valence to give the resulting electric charge of the complex anion. Typical examples of fluorine-containing complex anions include, for example, [TiF₄]²⁻, [AlF₆]³⁻, [BF₄]⁻, [SiF₆]²⁻, [FeF₆]²⁻, [ZrF₆]²⁻, [NbF₇]²⁻ [MnF₄]²⁻, [SbF₆]⁻, F₂Zr(HPO₄)₂]²⁻, [F₂Zr(FSO₃)₄]²⁻, [F₂Zr(HPO₄)(FSO₃)₂]²⁻, etc.

The metal cation may be a metal selected from the group consisting of group 1 to 16 metals including transition metals, lanthanides and actinides. Typical examples include alkaline metals, such as, e.g., Li, Na, K, Rb), earth alkaline metals such as e.g. Be, Mg, Ca, Sr, Ba; group 3 metals such as e.g. Sc, Y, La, including the lanthanides or actinides), group 4 metals (such as e.g. Ti, Zr), group 5 metals (such as e.g. V, Nb, Ta), group 11 metals, such as e.g. Cu, Ag, Au, group 12 metals, such as e.g. Zn, Cd), group 13 metals (such e.g. as Al, Ga, In), group 14 metals (such as e.g. Sn, Pb) group 15 metals (such as Sb, Bi) or combinations thereof.

The metal salt may also contain mixed anions, a fluoride anion and one or more other anions, such as for example Cl⁻, Br⁻, I⁻, SO₄²⁻ HSO₄⁻, PO₄³⁻, HPO₄²⁻, H₂PO₄⁻, OH⁻ etc. Typical examples of metal salts with mixed anions are fluoro apatites or
Anions such as, for example, FSO₃⁻; FPO₃²⁻, HFPO₃⁻.

Preferably, the salt has a poor tendency to hydrolyze in the presence of heat and humidity (such as 50% relative humidity and 80°C).
The salt is present in an amount effective to increase the proton-conductivity above the proton-conductivity, in particular at temperature of between 80 an 120°C and a relative humidity of less than 50% compared to a membrane that has not been treated with the salt but is otherwise identical.
The effective amounts depend on polymer and metal salt but are typically in the range from molar ratios of -SO₃⁻X group to metal salt of from about 1 : 1 to about 20 : 1, preferably from about 2:1 to 15 : 1. The molar ratios may further be adjusted with respect to specific desired mechanical or rheological properties of the membranes depending on their intended use, such as, for example, swelling behavior, density and mechanical stability.

The metal salt may be used as a solid (e.g. in powder form) or it may be prepared *in situ,* for example by precipitation. *In situ* preparation may be achieved for example by using a metal salt having an anion that can be easily removed (such as for example acetates) and treating the salt with HF which leads to the formation of a less soluble fluoride salt. The resulting acetic acid may be removed, for example, by distillation.

There are also provided membranes obtainable by treating a polymer as described above with a metal fluoride and, simultaneously or subsequently, with phosphoric acid, fluorophosphoric acid or their derivative acids. Typically, these acids are used in a molar amount that is about equal or in excess of the molar amounts of metal salts present in the membrane or membrane composition.

There are also provided membranes comprising metal salts with fluorine-containing anions, such as fluorides, and wherein the membrane further comprises anions derived from phosphoric acid, fluorophosphoric acids and their derivatives including combinations thereof.

Typical derivative acids include hypophosphoric acid, fluorohypophosphoric acid, pyrophosphoric acid, fluoropyrophosphoric acid etc.
Typical anions derived from those acids include PO₄³⁻, HPO₄²⁻, FPO₃²⁻, H₂PO₄⁻, P₂O₇⁴⁻ The membranes as described herein may further comprise PO₄³⁻, HPO₄²⁻, H₂PO₄⁻ ions and combinations thereof.

### Preparation of PEMs

The polymer electrolyte membranes described herein may be prepared by various methods.

One method involves:
a) providing a mixture of polymers as described herein and metal salts with F-containing anions as described herein, wherein the mixture may be a solution, a powder or a dispersion.
b) shaping the dispersion into a membrane

Another method involves
a') providing a membrane comprising a polymer as described above
b') treating the membrane with a metal salt having an F-containing anion as described above.

The mixture may be a dry mixture, such as a powder, or a dispersion or a solution in a suitable solvent or dispersant. If present, solvents/dispersants may be removed prior or after b) or b').

The methods my further involve an acid treatment with an acid selected from the group of phosphoric acid, fluorophosporic acid and their acid derivatives as described above. This step may be carried out before or after b) or simultaneously with b') or subsequently to it. The polymer mixture or the membrane in a) or a') may also be treated with the acids described above.
The process may further involve drying the membranes and resuspending the membranes in a liquid.
The polymer may be the PEM polymer, i.e. a polymer comprising sulfonic acid groups (in protonated form or as salts) it may be a PEM precursor polymer, i.e. a polymer comprising sulfonic acid precursor groups (-SO₂Y). If a PEM precursor polymer is used it may be converted into a PEM polymer before or after the metal salt is added, preferably before. Preferably, the -SO₃⁻X groups of the polymer are -SO₃⁻H groups.

The metal salts may be added to the polymer in form of a dried powder, or a solution or dispersion using suitable dispersants or solvents. The combined mixtures may be stored and provided as such. The mixture may then be shaped into a membrane and the solvents (dispersants) removed. The metal salts may also be added to the membrane for example by solvent deposition or precipitation.

Suitable solvents/dispersants include organic liquids, such as hydrocarbons (e.g. hexane) or inorganic liquids such as water. Preferably, the liquids have a boiling point below 200°C at ambient pressure (1 atm). Typical solvents or dispersants include but are not limited to organic liquids having one or more hydroxyl moiety, ether moiety, ketone moiety, carboxylic acid moiety, ester moiety, sulfoxide moiety , nitrogen oxide moiety, lactam moiety or combinations thereof. Typical examples include alcohols, e.g. ethanol, methanol, butanol, propanols, like n-propanol, etc., ethers, e.g. diethylene glycol, monoethylene glycol, triethylene glycol, or esters, such as ethyl acetate, carboxylic acids such as, for example, acetic acid, formic acid etc. Other examples include but are not limited to dimethyl sulfoxide and N-methyl-2-pyrrolidone.
The solvents/dispersant are chosen such that the fluorides are sufficiently dissolved or dispersed but are not or not substantially hydrolyzed. Preferably, the solvent/dispersant can be easily removed by distillation and is compatible with the membrane and/or catalyst system for which the membranes are to be employed.

The polymer electrolyte or polymer electrolyte precursor may be cast or otherwise formed from a suspension or solution into a suitable shape, preferably a (thin) layer. Any suitable method of casting may be used, such as, for example, solvent casting. The membrane may also be formed from the neat polymer or a mixture or a polymer blend in a melt process such as extrusion, blow molding, injection molding or compression molding or by hot-pressing the polymer into various shapes using corresponding moulds.

The membrane may also be formed by coating on to a suitable substrate. Any suitable form of coating may be used including but not limited to bar coating, spray coating, slit coating, brush coating, solvent coating or other formation; a formation that results from extruding a solvent onto a liner or carrier; a formation that results from spraying or otherwise depositing a solution or dispersion onto a liner or carrier, and the like.

Suitable liners or carriers include those fabricated from polymeric materials, including, but not limited to, polyolefins, polyesters, polyethylenenaphthalates, polyimides, and fluoropolymers.

The membranes may be subjected to thermal annealing at relatively high temperatures (typically at a temperature of 120° C or higher, more typically 130° C or higher). Examples of such methods of membrane fabrication are described in U.S. Pat. No. 6,649,295, which is hereby incorporated herein by reference.

Microwave annealing of a coated membrane has also been shown to successfully produce membranes with good mechanical properties, including good puncture resistance, that are at least comparable with membranes fabricated using conventional thermal annealing processes. Examples of microwave annealing are described in US Pat Appl. No. 2006/0141138, which is incorporated herein by reference.

After being formed into a membrane, the fluoropolymers of the present invention may also be cross-linked using a variety of cross-linking techniques, such as photochemical, thermal, and electron-beam techniques. An example of a suitable cross-linking technique includes electron-beam cross-linking, which is performed by exposing the fluoropolymers to electron beam radiation. Suitable doses of electron beam radiation include at least about one megarad, with particularly suitable doses including at least about three megarads, with even more particularly suitable doses including at least about five megarads, and with most particularly suitable doses including at least about fifteen megarads. Any suitable apparatus may be used to provide the electron beam radiation. An example of a suitable apparatus includes a trade designated "Energy Sciences CB300" e-beam system, which is commercially available from Energy Sciences, Inc. Wilmington, Mass.

The cross-linking may also be performed in the presence of one or more cross-linking agents. Suitable cross-linking agents for use with the polymers of the present invention include multifunctional compounds, such as multifunctional alkenes and other unsaturated cross-linkers. The cross-linking agents may be non-fluorinated, fluorinated to a low level, highly fluorinated, or more preferably, perfluorinated. The cross-linking agents may be introduced to the polymer by any conventional manner. A suitable technique for introducing the cross-linking agent includes blending the cross-linking agent with the polymer before forming the polymer into a membrane. Alternatively, the cross-linking agent may be applied to the fluoropolymer membrane, such as by immersing the fluoropolymer membrane in a solution of the cross-linking agent.

### Electrochemical devices

The membranes provided herein may be used in devices comprising one or more electrochemical cell. Examples of such devices include batteries, electrolysis cells, electrodialysis and fuel cells.

The membranes may also be used in separation techniques such as permeation separations, pervaporization and diffusion dialysis.

Preferably, the membranes containing the appropriate counterions (protons or cations) at the sulfonic acid moieties are used in batteries, electrolysis cells or fuel cells.

An electrolysis cell uses electricity to produce chemical changes or chemical energy. An example of an electrolysis cell is a chlor-alkali membrane cell where aqueous sodium chloride is electrolyzed by an electric current between an anode and a cathode. The electrolyte is separated into an anolyte portion and a catholyte portion by a membrane. In chlor-alkali membrane cells, caustic sodium hydroxide collects in the catholyte portion, hydrogen gas is evolved at the cathode portion, and chlorine gas is evolved from the sodium chloride-rich anolyte portion at the anode.

Fuel cells are electrochemical devices that produce usable electricity by the catalyzed combination of a fuel (such as hydrogen, ethanol or methanol) and an oxidant such as oxygen. A fuel cell such as a proton exchange membrane (PEM) fuel cell typically contains a membrane electrode assembly (MEA), which consists cation or proton conductive membrane disposed between a pair of gas diffusion layers. The membrane may be catalyst coated membrane itself or it may be disposed between a pair of catalyst layers (catalyst coating backings (CCB)). The respective sides of the electrolyte membrane are referred to as an anode portion and a cathode portion. In a typical hydrogen PEM fuel cell, hydrogen fuel is introduced into the anode portion, where the hydrogen reacts and separates into protons and electrons. The electrolyte membrane transports the protons to the cathode portion, while allowing a current of electrons to flow through an external circuit to the cathode portion to provide power. Oxygen is introduced into the cathode portion and reacts with the protons and electrons to form water and heat.

The DCC may also be called a gas diffusion layer (GDL). The anode and cathode electrode layers may be applied to the PEM or to the DCC during manufacture, so long as they are disposed between the PEM and DCC in the completed MEA. Useful PEM thicknesses range between about 200 µm and about 15 µm. The PEM preferably incorporates an ion-containing polymer membrane of a type described hereinabove. Any suitable DCC may be used. Typically, the DCC is comprised of sheet material comprising carbon fibers. The DCC is typically a carbon fiber construction selected from woven and non-woven carbon fiber constructions. Carbon fiber constructions which may be useful include: Toray Carbon Paper, SpectraCarb Carbon Paper, AFN non-woven carbon cloth, Zoltek Carbon Cloth, and the like. The DCC may be coated or impregnated with various materials, including carbon particle coatings, hydrophilizing treatments, and hydrophobizing treatments such as coating with polytetrafluoroethylene (PTFE).
Any suitable catalyst may be used, including platinum blacks or fines, ink containing carbon-supported catalyst particles (as described in U.S. 20040107869 and herein incorporated by reference), or nanostructured thin film catalysts (as described in U.S. Pat. No. 6,482,763 and U.S. Pat. No. 5,879,827, both incorporated herein by reference). The catalyst may be applied to the PEM or the DCC by any suitable means, including both hand and machine methods, including hand brushing, notch bar coating, fluid bearing die coating, wire-wound rod coating, fluid bearing coating, slot-fed knife coating, three-roll coating, or decal transfer. Coating may be achieved in one application or in multiple applications.

A typical fuel cell id described for example in US Pat Appl No 2006/141138 incorporated herein by reference.
A schematic representation of an MEA is shown in figure 5.

The present invention will now be described with reference to specific examples for illustrating the invention but without the intention to limit the invention thereto. Workers skilled in the art will recognize that changes may be made in form and detail without departing from the spirit and scope of the invention.

### EXAMPLES

The following examples were carried out with of a copolymer of TFE and CF₂=CF-O-(CF₂)₄SO₂F having an EW of 800 (FC-SOOO-0228-8-3, 3M St. Paul, MN, USA), hereinafter referred to as PFSA_D800. The same experiments as described below carried out with Nafion ® (EW 1100, DuPont, Dellamere, WI, USA) instead of PFSA_D800 give similar results.

### Example 1: preparation of membrane PFSA_D_800_ZrF₄ (10:1 and 4:1)

A diluted slurry containing 24.5 g of 22% wt. of PFSA_D_800 in water/n-propanol (70:30 w/w) and 84.4 g n-propanol were stirred and heated at 130°C for 45 minutes under reflux. 30.6 g of this slurry were mixed with 0.03 g of ZrF₄ (Aldrich) and 1 ml dimethyl sulfoxide (Merck) to give a -SO₃H : ZrF₄ mole ratio of 10 : 1. The mixture was homogenised in an ultrasonic bath for about 15 minutes (Sonorex Super RK 106, 35 kHz, Bandelin Electronics, Germany). The mixture was then dried in a polytetrafluoroethylene (PTFE) mould (5 x 5 cm) at 80°C for 24 h and annealed for 90 min at 130°C in ambient air and ambient pressure in an oven. The resulting membrane was immersed in 15-20 ml distilled water for 30 minutes prior to use (conductivity of the distilled water was 0.87 µS/cm). The part of the slurry not used for mixing with ZrF₄ was used for comparative experiments (referred to as D_800).
The experiment was repeated with a molar ratio of -SO₃H : ZrF₄ of 4 : 1.

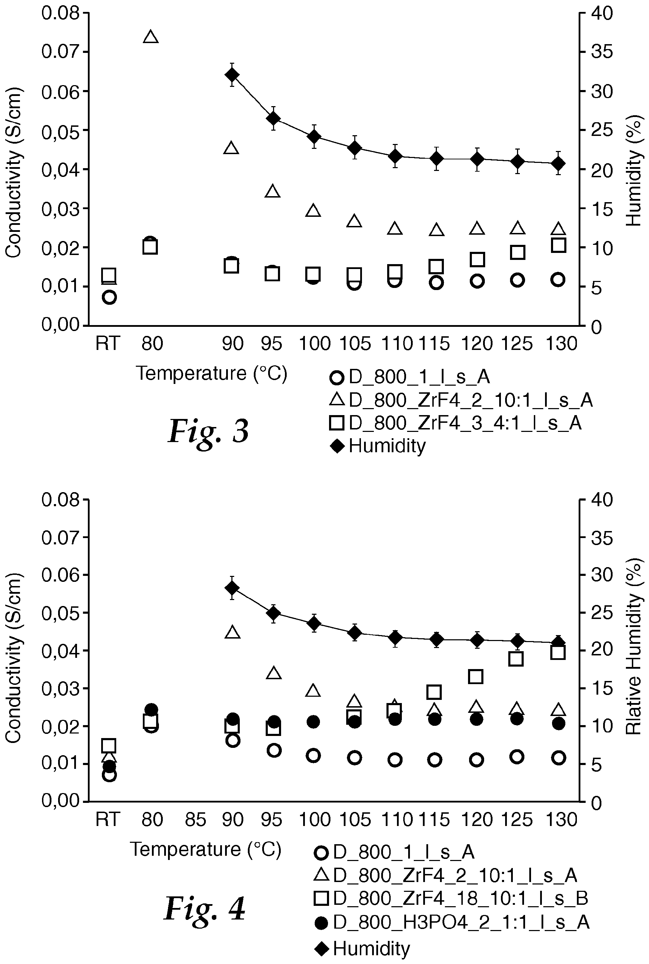

The EIS measurements of these membranes are shown in figure 3.

### Example 2: preparation of membrane PFSA_D_800_CaF₂ (10:1 and 5:1)

A slurry containing 24.5 g of a 22% wt. PFSA_D800 dispersed in water/n-propanol (70:30 w/w), 25.11g water and 58.6 g n-propanol was stirred and heated at 80°C for 45 minutes under reflux conditions.

22.4 g of this slurry were mixed with 0.022 g of Ca(COOCH₃)₂ to obtain a mixture with a -SO₃H : Ca(COOCH₃)₂ mole ratio of 10:1. The mixture was homogenised in the ultrasonic bath of example 1 for about 15 minutes and then transferred into a 3 necked flask equipped with a dripping funnel and a reflux condenser. An 8.81wt.% HF solution in n-propanol was prepared by diluting 0.5 m of commercial 40% wt HF solution (Merck) in 2.55 1 propanol. 0.12 ml of this 8.81%wt HF solution were added to the slurry under vigorous stirring at room temperature. The mixture was then heated under continuous stirring to 118°C and maintained for 30 minutes to remove acetic acid and excess n-propanol-H₂O azeotrope by distillation. The resulting dispersion was dried in the PTFE mould of example 1 at 80°C for 24 h and then annealed for 90 min at 130°C in ambient air. The resulting membrane was immersed in 15-20 ml of distilled water for 20 minutes (conductivity of the water was 2 µS/cm) prior to use.

The same experiment was repeated with a molar ratio of -SO₃H : CaF₂ of 5:1.

The part of the slurry not used for mixing with CaF₂ was used for comparative experiments (referred to as D_800).

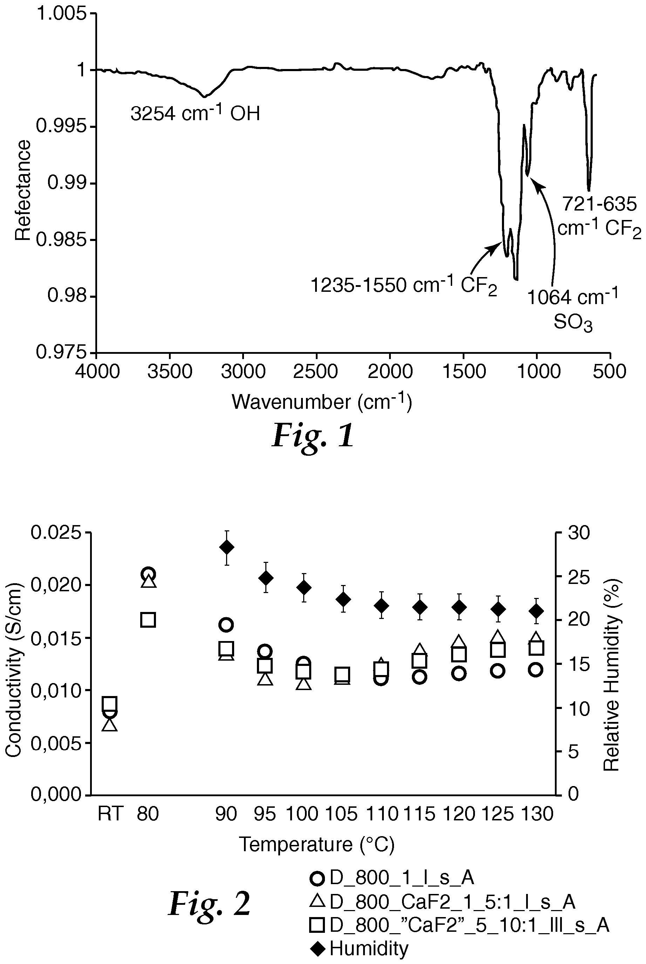

The EIS results of these membranes are shown in figure 2.

### Example 3: preparation of membrane PFSA_D_800_ZrF₄ (10:1) and treatment with H₃PO₄

Example 1 was repeated with a molar ration of -SO3H : ZrF4. The dried membrane was transferred into a 500ml beaker and 25 ml distilled water (1-2 µS/cm) were added. After swelling for 25 min the membrane was transferred into a clean beaker. The membrane was soaked for 2 h with 25 ml of 15% H3PO4 solution (obtained by diluting 85% H3PO4, Aldrich, Germany). The membrane was then transferred into a clean beaker by a pair of tweezers and soaked with 100 ml distilled water (1-2µS/cm) for 1h before the membrane was dried in an oven at 80°C for 30 minutes.

EIS measurements of this membrane are shown in figure 4 compared with the membrane of example 1 and a PFSA_D_800 membrane not doped with ZrF₄ but treated in the same way with H₃PO₄ as described above.

### 2. Membrane characterization

### 2.1. Proton Conductivity

Proton conductivity was measured by electric impedance spectroscopy as described in F. Bauer, "Protonleitende Composite-Membranen für Brennstoffzellen-Anwendungen", PhD thesis, University Bayreuth, Germany, December 2005, Shaker Verlag, 2006, ISBN: 3-8322-5505-2, pages 51-52 and A-151) under controlled humidity at frequencies from 1 MHz down to 20 Hz.

### 2.2. IR spectroscopy

Fourier Transform-Infrared Spectroscopy, FT- using a Vertex 70 from Bruker. The membranes were dried at 80°C for 30 minutes and transferred to the ATR (Attenuated Total Reflection) cell (Vertex 70, Bruker) and measured.

### 2.3. End group and side chain determination

The compositions of the carbonyl containing end group may be determined by infrared detection (see US 4,599,386).

Presence of -SO3X groups can be determined by IR spectroscopy.
Polymer composition, presence of pending groups and presence of -CF2Y groups may also be determined by F-NMR (US US 7,214,740).

### 2.4. Equivalent Weight Measurements

EW measurements can be carried out as follows: dry membrane samples were pulverized, weighed, suspended in about 60 ml of distilled water and titrated under stirring with 0.1 N NaOH to determine the molar amount of acid groups in the membrane sample. The equivalent weight (EW) is determined by dividing the weight in grams by the amount in moles of acid groups.

## Claims

1. An electrochemical device comprising
(i) at least one polymer having a fully fluorinated polymer backbone chain and, pending therefrom, one or more side chains, comprising a plurality of sulfonic acid groups of the general formula
-SO₃⁻X (I)
or a plurality of -SO₃⁻X precursor groups of the general formula
-SO₂Y (II)
in which X represents H+ or M,
M represents a monovalent metal cation or -NH₄⁺ or
Y represents a group that can be converted by treatment with the base M[OH⁻] into -SO₃⁻M;
(ii) at least one metal salt comprising an F-containing anion selected from the group consisting of F⁻, FSO₃⁻; FPO₃²⁻, HFPO₃⁻ , [M'F₄]⁻, [M'F₄]²⁻, [M'F₆]²⁻, [M'F₇]²⁻ in which M' represents one or more metal cations, NH₄⁺ or a combination thereof and has a valence such that the complex anion carries the negative charge as indicated, and wherein the side chains have the general formula
-Rp-SO₃⁻X (III)
in which Rp links to the polymer backbone and represents a linear, branched or cyclic perfluorinated alkyl, alkoxy, polyoxyalkyl or aryl, and wherein the polymer has a backbone comprising repeating units derived from tetrafluoroethylene (TFE), hexafluoropropylene (HFP), or a perfluorinated vinyl or ally ethers corresponding to the formula:
CF₂=CF-(CF₂)ₗ-O(R^{a}_{f}O)ₙ(R^{b}_{f}O)ₘR^{c}_{f} (IV)
or a combination thereof, wherein in formula (IV) R^{a}_{f} and R^{b}_{f} are different or identical linear or branched perfluoroalkylene groups of 1 to 6 carbon atoms, in particular 2 to 6 carbon atoms, m and n are independently 0 to 10, l is either 1 or 0, and R^{c}_{f} is a perfluoroalkyl group of 1 to 6 carbon atoms.

2. The electrochemical device of claim 1 selected from batteries, electrolysis cells, electrodialysis cells and fuel cells.

3. The electrochemical device according to any one of the preceding claims wherein the polymer comprises pending side chains selected from the group consisting of -O(CF₂)ₙ-SO₃⁻X, -O(CF₂)₄-SO₃⁻X, -O(CF₂)₄SO₂Y, -OCF₂CF(CF₃)OCF₂CF₂-SO₃⁻X, -OCF₂CF(CF₃)OCF₂CF₂SO₂Y, -O-CF₂-CF(OCF₂CF₂-SO₃⁻X)CF₃, -O-CF₂-CF(OCF₂CF₂SO₂Y)CF₃ and combinations thereof
with X and Y being defined as described above and n being 1, 2, 3, 4 or 5.

4. The electrochemical device according to any one of the preceding claims wherein the polymer comprises -SO₃⁻X groups with X representing H+.

5. The electrochemical device according to any one of the preceding claims wherein the metal salt is a metal fluoride.

6. The electrochemical device according to any one of the preceding claims further comprising PO₄³⁻ ions.

7. The electrochemical device according to any one of the preceding claims wherein the polymer has an equivalent weight (EW) in grams between about 600 and about 1200.

8. The electrochemical device according to any one of preceding claims wherein the membrane has a proton conductivity of at least 0.01 Siemens/cm at a temperature of 120 °C and a relative humidity between 10 and 50 %.

9. The electrochemical device according to any one of the preceding claims wherein the membrane comprises a catalyst suitable for catalyzing a fuel cell reaction.

10. A membrane for an electrochemical device obtainable by treating a polymer as defined in any one of claims 1 to 3 with
a) one or more metal salts comprising an F-containing anion as defined in claim 4 or 5, wherein the polymer is either in the shape of a membrane before a) or is shaped into a membrane after a).

11. The membrane of claim 10 further comprising b): treating the polymer with an acid selected from the group consisting of phosphoric acid, pyrophosphoric acid, fluorophosphoric acid, hypophosphoric acid, hypofluorophosphoric acid and combinations thereof.

12. A method of preparing an electrolyte membrane
comprising
(i) providing a polymer as defined in any one of preceding claims 1, 3 or 4;
(ii) treating that polymer with at least one metal salt comprising a F-containing anion according to claim 1 or 5,
wherein either the polymer or the salt or both are in the form of a dispersion in a suitable dispersant of dissolved in a suitable solvent;
(iii) shaping the mixture into a membrane.

13. A method of preparing an electrolyte membrane comprising
(i) providing a membrane comprising a polymer as defined in any one of preceding claims 1, 3 or 4,
(ii) treating the membrane with at least one metal salt having an F-containing anion according to claim 1 or 5.

## Patentansprüche

1. Eine elektrochemische Vorrichtung, umfassend
(i) mindestens ein Polymer mit einem vollfluorierten Polymergrundgerüst und, davon abstehend, einer oder mehreren Seitenketten, umfassend eine Mehrzahl von Sulfonsäuregruppen der allgemeinen Formel
-SO₃⁻X (I)
oder eine Mehrzahl von -SO₃⁻X-Vorläufergruppen der allgemeinen Formel
-SO₂Y (II)
wobei X für H+ oder M steht,
M für ein einwertiges Metallkation oder -NH₄⁺ steht oder
Y für eine Gruppe steht, die durch Behandlung mit der Basis M[OH⁻] in -SO₃⁻M konvertiert werden kann;
(ii) mindestens ein Metallsalz, umfassend ein F-haltiges Anion, ausgewählt aus der Gruppe bestehend aus F⁻, FSO₃⁻; FPO₃²⁻, HFPO₃⁻, [M'F₄]⁻, [M'F₄]²⁻, [M'F₆]²⁻, [M'F₇]²⁻, wobei M' für ein oder mehrere Metallkationen, NH₄⁺ oder eine Kombination davon steht und eine Valenz hat, so dass das komplexe Anion die negative Ladung wie angezeigt aufweist,
und wobei die Seitenketten die allgemeine Formel
-Rₚ-SO₃⁻X (III)
haben, worin Rp mit dem Polymergrundgerüst verknüpft ist und für ein lineares, verzweigtes oder cyclisches, perfluoriertes Alkyl, Alkoxy, Polyoxyalkyl oder Aryl steht, und wobei das Polymer ein Grundgerüst aufweist, das Wiederholungseinheiten umfasst, die von Tetrafluorethylen (TFE), Hexafluorpropylen (HFP) oder einem perfluorierten Vinyl oder Allylethern entsprechend der Formel:
CF₂=CF-(CF₂)₁-O(R^{a}_{f}O)ₙ(R^{b}_{f}O)ₘR^{c}_{f} (IV)
oder einer Kombination davon abgeleitet sind, wobei in der Formel (VI) R^{a}_{f} und R^{b}_{f} unterschiedliche oder identische lineare oder verzweigte Perfluoralkylengruppen mit 1 bis 6 Kohlenstoffatomen, insbesondere 2 bis 6 Kohlenstoffatomen sind, m und n unabhängig voneinander 0 bis 10 sind, 1 entweder 1 oder 0 ist und R^{c}_{f} eine Perfluoralkylgruppe mit 1 bis 6 Kohlenstoffatomen ist.

2. Die elektrochemische Vorrichtung nach Anspruch 1, ausgewählt aus Batterien, Elektrolysezellen, Elektrodialysezellen und Brennstoffzellen.

3. Die elektrochemische Vorrichtung nach einem der vorstehenden Ansprüche, wobei das Polymer abstehende Seitenketten, ausgewählt aus der Gruppe bestehend aus -O(CF₂)ₙ-SO₃⁻X, -O(CF₂)₄-SO₃⁻X, -O(CF₂)₄SO₂Y, -OCF₂CF(CF₃)OCF₂CF₂-SO₃⁻ X, -OCF₂CF(CF₃)OCF₂CF₂SO₂Y, -O-CF₂-CF(OCF₂CF₂-SO₃⁻X)CF₃, -O-CF₂-CF(OCF₂CF₂SO₂Y)CF₃ und Kombinationen davon, umfasst,
wobei X und Y wie oben beschrieben definiert sind und n 1, 2, 3, 4 oder 5 ist.

4. Die elektrochemische Vorrichtung nach einem der vorstehenden Ansprüche, wobei das Polymer -SO₃⁻X-Gruppen umfasst, wobei X für H⁺ steht.

5. Die elektrochemische Vorrichtung nach einem der vorstehenden Ansprüche, wobei das Metallsalz ein Metallfluorid ist.

6. Die elektrochemische Vorrichtung nach einem der vorstehenden Ansprüche, ferner umfassend PO₄³⁻-Ionen.

7. Die elektrochemische Vorrichtung nach einem der vorstehenden Ansprüche, wobei das Polymer ein Äquivalentgewicht (EW) in Gramm von zwischen etwa 600 und etwa 1200 aufweist.

8. Die elektrochemische Vorrichtung nach einem der vorstehenden Ansprüche, wobei die Membran eine Protonenleitfähigkeit von mindestens 0,01 Siemens/cm bei einer Temperatur von 120 °C und einer relativen Feuchtigkeit von zwischen 10 und 50 % aufweist.

9. Die elektrochemische Vorrichtung nach einem der vorstehenden Ansprüche, wobei die Membran einen Katalysator umfasst, der zur Katalyse einer Brennstoffzellenreaktion geeignet ist.

10. Eine Membran für eine elektrochemische Vorrichtung, erhältlich durch Behandeln eines Polymers wie in einem der Ansprüche 1 bis 3 definiert, mit
a) einem oder mehreren Metallsalzen, umfassend ein F-haltiges Anion wie in Anspruch 4 oder 5 definiert, wobei das Polymer entweder in Form einer Membran vor a) vorliegt oder in eine Membran nach a) eingeformt ist.

11. Die Membran nach Anspruch 10, ferner umfassend b): Behandeln des Polymers mit einer Säure, ausgewählt aus der Gruppe bestehend aus Phosphorsäure, Pyrophosphorsäure, Fluorphosphorsäure, Hypophosphorsäure, Hypofluorphosphorsäure und Kombinationen davon.

12. Ein Verfahren zum Herstellen einer Elektrolytmembran, umfassend
(i) Bereitstellen eines Polymers wie in einem der vorstehenden Ansprüche 1, 3 oder 4 definiert;
(ii) Behandeln dieses Polymers mit mindestens einem Metallsalz, umfassend ein F-haltiges Anion nach Anspruch 1 oder 5,
wobei entweder das Polymer oder das Salz oder beide in Form einer Dispersion in einem geeigneten Dispergiermittel von gelöst in einem geeigneten Lösungsmittel vorliegen;
(iii) Formen des Gemisches in eine Membran.

13. Ein Verfahren zum Herstellen einer Elektrolytmembran, umfassend
(i) Bereitstellen einer Membran, umfassend ein Polymer wie in einem der vorstehenden Ansprüche 1, 3 oder 4 definiert,
(ii) Behandeln der Membran mit mindestens einem Metallsalz mit einem F-haltigen Anion nach Anspruch 1 oder 5.

## Revendications

1. Dispositif électrochimique comprenant :
(i) au moins une chaîne squelettale en polymère entièrement fluorée et, rattachées à celle-ci, une ou plusieurs chaînes latérales, comprenant une pluralité de groupes acide sulfonique de formule générale
-SO₃⁻X (I)
ou une pluralité de groupes précurseurs -SO₃⁻X de formule générale
-SO₂Y (II)
dans laquelle X représente H+ ou M,
M représente un cation métallique monovalent ou -NH₄⁺ ou
Y représente un groupe qui peut être converti par traitement avec la base M[OH⁻] en -SO₃⁻M ;
(ii) au moins un sel métallique comprenant un anion contenant F choisi parmi le groupe constitué de F⁻, FSO₃⁻ ; FPO3²⁻, HFPO₃⁻, [M'F₄]⁻, [M'F₄]²⁻, [M'F₆]²⁻, [M'F₇]²⁻ dans lequel M' représente un ou plusieurs cations métalliques, NH₄⁺ ou une de leurs combinaisons et a une valence de telle sorte que l'anion complexe transporte la charge négative comme indiqué,
et dans lequel les chaînes latérales ont la formule générale
-Rp-SO₃⁻X (III)
dans laquelle Rp est lié au squelette en polymère et représente un alkyle, un alcoxy, un polyoxyalkyle ou un aryle perfluoré linéaire, ramifié ou cyclique, et dans lequel le polymère a une structure principale comprenant des motifs répétés dérivés du tétrafluoroéthylène (TFE), de l'hexafluoropropylène (HFP), ou un vinyle perfluoré ou des éthers allyliques correspondant à la formule :
CF₂=CF-(CF₂)₁-O(R^{a}_{f}O)ₙ(R^{b}_{f}O)ₘR^{c}_{f} (IV)
ou une de leurs combinaisons, dans lequel dans la formule (IV) R^{a}_{f} et R^{b}_{f} sont des groupes perfluoroalkylène linéaires ou ramifiés différents ou identiques de 1 à 6 atomes de carbone, en particulier de 2 à 6 atomes de carbone, m et n sont indépendamment 0 à 10, 1 est 1 ou 0, et R^{c}_{f} est un groupe perfluoroalkyle de 1 à 6 atomes de carbone.

2. Dispositif électrochimique selon la revendication 1 choisi parmi des batteries, des cellules d'électrolyse, des cellules d'électrodialyse et des piles à combustible.

3. Dispositif électrochimique selon l'une quelconque des revendications précédentes dans lequel le polymère comprend des chaînes latérales rattachées choisies parmi le groupe constitué de -O(CF₂)ₙ-SO₃⁻X, -O(CF₂)₄-SO₃⁻X,-O(CF₂)₄SO₂Y, -OCF₂CF(CF₃)OCF₂CF₂-SO₃⁻X, -OCF₂CF(CF₃)OCF₂CF₂SO₂Y, -O-CF₂-CF(OCF₂CF₂-SO₃⁻X)CF₃, -O-CF₂-CF(OCF₂CF₂SO₂Y)CF₃ et leurs combinaisons
avec X et Y étant définis comme décrit ci-dessus et n étant 1, 2, 3, 4 ou 5.

4. Dispositif électrochimique selon l'une quelconque des revendications précédentes dans lequel le polymère comprend des groupes -SO₃⁻X avec X représentant H⁺.

5. Dispositif électrochimique selon l'une quelconque des revendications précédentes dans lequel le sel métallique est un fluorure métallique.

6. Dispositif électrochimique selon l'une quelconque des revendications précédentes comprenant en outre des ions PO₄³⁻.

7. Dispositif électrochimique selon l'une quelconque des revendications précédentes dans lequel le polymère a un poids équivalent (PE) en grammes compris entre environ 600 et environ 1 200.

8. Dispositif électrochimique selon l'une quelconque des revendications précédentes dans lequel la membrane a une conductivité protonique d'au moins 0,01 Siemens/cm à une température de 120 °C et une humidité relative comprise entre 10 et 50 %.

9. Dispositif électrochimique selon l'une quelconque des revendications précédentes dans lequel la membrane comprend un catalyseur approprié pour catalyser une réaction de pile à combustible.

10. Membrane pour un dispositif électrochimique pouvant être obtenu par traitement d'un polymère tel que défini selon l'une quelconque des revendications 1 à 3 avec
a) un ou plusieurs sels métalliques comprenant un anion contenant F tel que défini selon la revendication 4 ou 5, dans lequel le polymère est sous la forme d'une membrane avant a) ou mis en forme en une membrane après a).

11. Membrane selon la revendication 10 comprenant en outre b) : le traitement du polymère avec un acide choisi parmi le groupe constitué d'acide phosphorique, d'acide pyrophosphorique, d'acide fluorophosphorique, d'acide hypophosphorique, d'acide hypofluorophosphorique et leurs combinaisons.

12. Procédé de préparation d'une membrane électrolytique comprenant
(i) la fourniture d'un polymère tel que défini selon l'une quelconque des revendications précédentes 1, 3 ou 4 ;
(ii) le traitement de ce polymère avec au moins un sel métallique comprenant un anion contenant F selon la revendication 1 ou 5,
dans lequel le polymère ou le sel ou les deux sont sous la forme d'une dispersion dans un dispersant approprié de dissous dans un solvant approprié ;
(iii) la mise en forme du mélange en une membrane.

13. Procédé de préparation d'une membrane électrolytique comprenant
(i) la fourniture d'une membrane comprenant un polymère tel que défini selon l'une quelconque des revendications précédentes 1, 3 ou 4,
(ii) le traitement de la membrane avec au moins un sel métallique ayant un anion contenant F selon la revendication 1 ou 5.
